Europäisches Patentamt

European Patent Office

Office européen des brevets

(19)

(11) **EP 0 939 880 B1**

(12) **EUROPÄISCHE PATENTSCHRIFT**

(45) Veröffentlichungstag und Bekanntmachung des Hinweises auf die Patenterteilung:
**12.04.2000  Patentblatt 2000/15**

(51) Int Cl.$^7$: **F25B 41/06**

(21) Anmeldenummer: **97950190.5**

(86) Internationale Anmeldenummer:
**PCT/EP97/06357**

(22) Anmeldetag: **14.11.1997**

(87) Internationale Veröffentlichungsnummer:
**WO 98/22763 (28.05.1998 Gazette 1998/21)**

(54) **VERFAHREN ZUR REGELUNG EINER KÄLTEANLAGE SOWIE KÄLTEANLAGE UND EXPANSIONSVENTIL**

PROCESS FOR REGULATING A REFRIGERATING SYSTEM, REFRIGERATING SYSTEM AND EXPANSION VALVE

PROCEDE DE REGLAGE D'UNE INSTALLATION FRIGORIFIQUE, INSTALLATION FRIGORIFIQUE ET SOUPAPE DE DETENTE

(84) Benannte Vertragsstaaten:
**DE DK ES FR GB IT**

(30) Priorität: **19.11.1996  DE 19647718**

(43) Veröffentlichungstag der Anmeldung:
**08.09.1999  Patentblatt 1999/36**

(73) Patentinhaber: **Danfoss A/S**
**6400 Nordborg (DK)**

(72) Erfinder:
• **JENSEN, Kenn, Sönder**
  **DK-6400 Sönderborg (DK)**
• **SCHMIDT, Frede**
  **DK-6400 Sönderborg (DK)**

(56) Entgegenhaltungen:
| | |
|---|---|
| EP-A- 0 148 102 | DE-A- 2 749 250 |
| DE-A- 4 115 693 | US-A- 2 709 340 |
| US-A- 2 735 272 | US-A- 3 313 121 |
| US-A- 3 638 446 | US-A- 4 879 879 |
| US-A- 5 148 978 | |

EP 0 939 880 B1

**Beschreibung**

Die Erfindung bezieht sich auf ein Verfahren zur Regelung einer Kälteanlage, auf eine Kälteanlage und auf ein Expansionsventil für eine solche Kälteanlage.

Aus WO 82/04142 ist eine Kälteanlage bekannt, die in Reihe einen Verdichter, einen Kondensator, ein Expansionsventil und einen Verdampfer aufweist. Sie wird mittels des Expansionsventils geregelt, das als Stellglied eine Membran oder einen Balg aufweist und durch Wärmezufuhr mittels eines Heizelements beeinflußbar ist. Die eine Seite des Stellglieds wird vom Dampfdruck eines mit einer Flüssigkeits-Dampf-Füllung versehenen Fühlersystems belastet, dessen Fühlertemperatur durch Wärmezufuhr bestimmt ist. Die Überhitzung wird an der Ausgangsseite des Verdampfers gemessen und die Wärmezufuhr in Abhängigkeit vom Meßwert geregelt. Der beheizbare Fühler liegt an der ausgangsseitigen Kältemittelleitung des Verdampfers an, wo bereits überhitzter Kühlmitteldampf vorhanden ist. Die Wärmeabfuhr ist daher verhältnismäßig gering und ändert sich mit der Überhitzungstemperatur.

Aus DE 40 05 728 A1 ist eine Kälteanlage bekannt, die in Abhängigkeit von der Überhitzung am Verdampferausgang geregelt wird. Zu diesem Zweck weist das Expansionsventil ein als Membran ausgebildetes Stellglied auf, das auf der einen Seite vom Kältemitteldruck am Verdampferausgang und auf der anderen Seite von einem der Kältemitteltemperatur am Verdampferausgang entsprechenden Druck beaufschlagt wird. Diese Regelung erfordert, daß entweder die zum Verdichter führende Saugleitung oder eine beispielsweise als Kapillarrohr ausgebildete Meßleitung bis zum Expansionsventil verlegt werden muß. Dies führt vielfach zu Einschränkungen in der Auslegung der Kälteanlage. Hinzu kommt, daß sich häufig eine sehr unruhigere Regelung mit stark schwankender Überhitzung ergibt.

Im bekannten Fall ist dieser Überhitzung-Regelung noch ein Zusatzeinfluß überlagert, der von der Temperatur in der Leitung zwischen Verdichter und Kondensator abgeleitet ist. Zu diesem Zweck ist einer der beiden Druckräume der Membrandose mit einem Steuermedium gefüllt, das durch die Membran hindurch im Wärmeaustausch mit dem überhitzten Kältemittel am Ausgang des Verdampfers steht und zusätzlich durch ein Heizelement, beispielsweise ein PTC-Widerstand, beheizt wird.

Aus US 3 313 121 ist eine Kälteanlage und ein Verfahren zu deren Regelung mittels eines Expansionsventils bekannt, das als Stellglied eine Membran aufweist, wobei die eine Seite der Membran vom Kältemitteldruck an der Ausgangsseite des Expansionsventils und die andere Seite vom Druck eines Fühlers, der an der Überhitzungsstrecke des Verdampfers anliegt, belastet wird.

Der Erfindung liegt die Aufgabe zugrunde, die Regelung einer Kälteanlage mit einfachen und preisgünstigen Mitteln zu verbessern.

Diese Aufgabe wird verfahrensmäßig durch die Merkmale des Anspruchs 1 gelöst.

Bei dieser Ausgestaltung steht der Fühler ständig mit flüssigem Kältemittel in thermischem Kontakt, was eine gute Wärmeabfuhr bei im wesentlichen konstanten Temperaturverhältnissen ergibt. Der Öffnungsgrad des Ventils ist im wesentlichen durch die Wärmezufuhr mittels des Heizelements bestimmt. Denn durch die Beheizung wird der Druck im Fühlersystem erhöht. Als Füllung, deren Druck temperaturabhängig ist, kann man beispielsweise eine Flüssigkeits-Dampf-Füllung oder eine Adsorptionsfüllung verwenden. Hier ist der Dampfdruck eine Funktion der Temperatur und nimmt mit steigender Temperatur zu. Je größer die dem Heizelement zugeführte Leistung, umso größer ist der Öffnungsgrad des Ventils. Wegen der nachstehenden Beziehung ist praktisch Proportionalität gegeben:

$$E \sim K \times A \times (T_f - T_s)$$

E = die dem Heizelement zugeführte Leistung
K = Wärmeübergangskoeffizient
A = Wärmeübergangsfläche zwischen Fühler und Kältemittel
$T_f$ = Fühlertemperatur
$T_s$ = Sättigungstemperatur des Kältemittels.

Diese Beziehung gilt unabhängig davon, wie hoch Sättigungsdruck und Sättigungstemperatur des Kältemittels am Ventilausgang gerade sind. Der Öffnungsgrad des Ventils ist somit unabhängig vom Verdampferdruck. Eine etwaige Anpassung mit Hilfe des Heizelements ist nicht erforderlich.

Da die Wärmezufuhr geregelt, also mittels eines Reglers vorgegeben wird, kann man alle regelungstechnischen Möglichkeiten zur Verbesserung der Regelung anwenden, beispielsweise einen PI-Regler verwenden. Darüber hinaus können auch weitere Zusatzfunktionen, wie eine Abhängigkeit von Verdichterdrehzahl, Vereisung oder zu starker Erwärmung des verdichteten Kältemittels, berücksichtigt werden. Dies erlaubt eine sehr genaue Regelung. Ein weiterer Vorteil besteht darin, daß das Expansionsventil schließt, wenn das Heizelement ausfällt.

Bei der Weiterbildung nach Anspruch 2 braucht der Kältemitteldruck und bei der Weiterbildung nach Anspruch 3 die Kältemitteltemperatur nur an der Ausgangsseite des Expansionsventils erfaßt zu werden. Eine Leitungsverbindung zwischen dem Ausgang des Verdampfers und dem Expansionsventil ist nicht erforderlich. Für die Verbindung zwischen den Meßstellen und dem Regler genügen einfache Signalleitungen und für die Verbindung zwischen dem Regler und dem Heizelement eine einfache elektrische Leitung. Dies führt zu einer einfachen und billigen Konstruktion. Beim Anpassen der Kälteanlage an einen bestimmten Verwendungszweck kann der Leitungsverlauf mit größerer Freiheit als bisher gewählt werden. Das Regelungsprinzip eignet sich nicht nur für Trocken-Verdampfer, bei denen die Überhitzung gemessen wird, sondern auch für überflutete Verdampfer, bei denen als Meßwert das Flüssigkeitsniveau dient. All dies erlaubt eine sehr vielseitige Anwendung.

Bei der Alternative nach Anspruch 4 wird ständig eine geringe Kältemittelmenge entspannt, auch wenn das Expansionsventil geschlossen ist.

Vorrichtungsmäßig wird die Aufgabe durch die Merkmale der Ansprüche 5 und 6 gelöst, die zwei Alternativen zur Erfassung der Sättigungstemperatur angeben.

Wenn gemäß Anspruch 7 das Rohr als Kapillarrohr ausgebildet ist, kann dieses Rohr sowohl den Bypass-Kanal als auch die zweite Drosselstelle bilden. Durch diese Doppelfunktion kann man sich zusätzliche Bauteile einsparen.

Empfehlenswert ist es, wenn gemäß Anspruch 8 der Ausgangskanal mit der Ausgangsseite des Expansionsventils verbunden ist. Der Ausdruck "Ausgangsseite des Expansionsventils" umfaßt den gesamten Bereich zwischen der Drosselstelle des Expansionsventils und dem tatsächlichen Eingang des Verdampfers, auch wenn Umschaltventile, Verteiler oder sonstige Einbauten vorhanden sind. Es besteht daher eine große Freizügigkeit in der Anbringung des Fühlers und des Ausgleichskanals.

Besonders günstig ist es jedoch, wenn diese Bauteile gemäß Anspruch 9 dem Expansionsventil dicht benachbart sind, weil dann mit kurzen Verbindungswegen gearbeitet werden kann. Wesentlich ist aber auch, daß der Druck im Ausgleichskanal gleich dem Druck am Anbringungsort des Temperaturfühlers ist.

Verläuft der Ausgleichskanal gemäß Anspruch 10, benötigt man lediglich ein kurzes Rohr, um die Kältemittelleitung mit dem einen Druckraum zu verbinden.

Eine noch billigere Lösung ergibt sich, wenn der Ausgleichskanal gemäß Anspruch 11 im Ventilinneren verläuft.

Das Kapillarrohr gemäß Anspruch 12 führt zu einer klaren Trennung der Fühlertemperatur und der Temperatur im Druckraum.

Bei der Ausgestaltung nach Anspruch 13 bildet die an den Ausgang des Expansionsventils anschließende Kältemittelleitung einen bevorzugten Träger für Fühler und Heizelement. Zum Festhalten kann gemäß Anspruch 14 ein Spannband dienen.

Bei der Alternative nach Anspruch 15 ist der Fühler im oder am ausgangsseitigen Gehäuseteil des Expansionsventils angeordnet, wobei gemäß Anspruch 16 der Fühler durch einen Hohlraum im Gehäuseteil gebildet sein kann.

Eine günstige Lösung mit Bypasskanal gibt Anspruch 17 an. Hierbei sind die beiden Alternativen nach den Ansprüchen 18 und 19 zu empfehlen.

Bei einer bevorzugten Weiterbildung nach Anspruch 20 ist das Heizelement im Innern des Fühlers angeordnet. Dies ergibt eine noch bessere Wärmeübertragung und erleichtert die Montage.

Die Wärmeisolation gemäß Anspruch 21 hilft, Fehler durch Wärmeabstrahlung in die Umgebung zu vermeiden.

Ein wesentlicher Bestandteil der Kälteanlage, der auch einzeln gehandelt wird, ist das Expansionsventil mit den Merkmalen des Anspruchs 22. Alle benötigten Elemente befinden sich im Expansionsventil oder in dessen unmittelbarer Nähe.

Für die Praxis ist es günstig, wenn nach Anspruch 23 das Ventilgehäuse, der Ausgleichskanal und das Fühlersystem eine vorgefertigte Baueinheit bilden, zu der gemäß Anspruch 26 auch die an den Ventilausgang anschließende Kältemittelleitung gehören kann.

Die Weiterbildungen nach den Ansprüchen 24, 25 und 27 bis 29 kennzeichnen verschiedene bevorzugte Ausführungsformen.

Das Expansionsventil kann mit Vorteil auch mit einem Bypass-Kanal gemäß Anspruch 31 versehen werden.

Die Erfindung wird nachstehend anhand in der Zeichnung dargestellter bevorzugter Ausführungsbeispiele näher erläutert. Es zeigen:

Fig. 1    ein Schaltbild einer Kälteanlage gemäß der Erfindung mit einem Durchlauf-Verdampfer,

Fig. 2    ein Expansionsventil in schematischer Darstellung,

Fig. 3    einen Schnitt längs der Linie A-A in Fig. 2,

Fig. 4    ein abgewandeltes Expansionsventil in schematischer Darstellung,

Fig. 5    ein Schaltbild einer abgewandelten Kälteanlage gemäß der Erfindung mit einem überfluteten Verdampfer,

Fig. 6    einen abgewandelten Fühler,

Fig. 7    schematisch eine weitere Alternative eines abgewandelten Expansionsventils,

Fig. 8    einen Ausschnitt aus einer weiteren Ausführungsform einer erfindungsgemäßen Kälteanlage und

Fig. 9    eine weitere Ausgestaltung eines Expansionsventils.

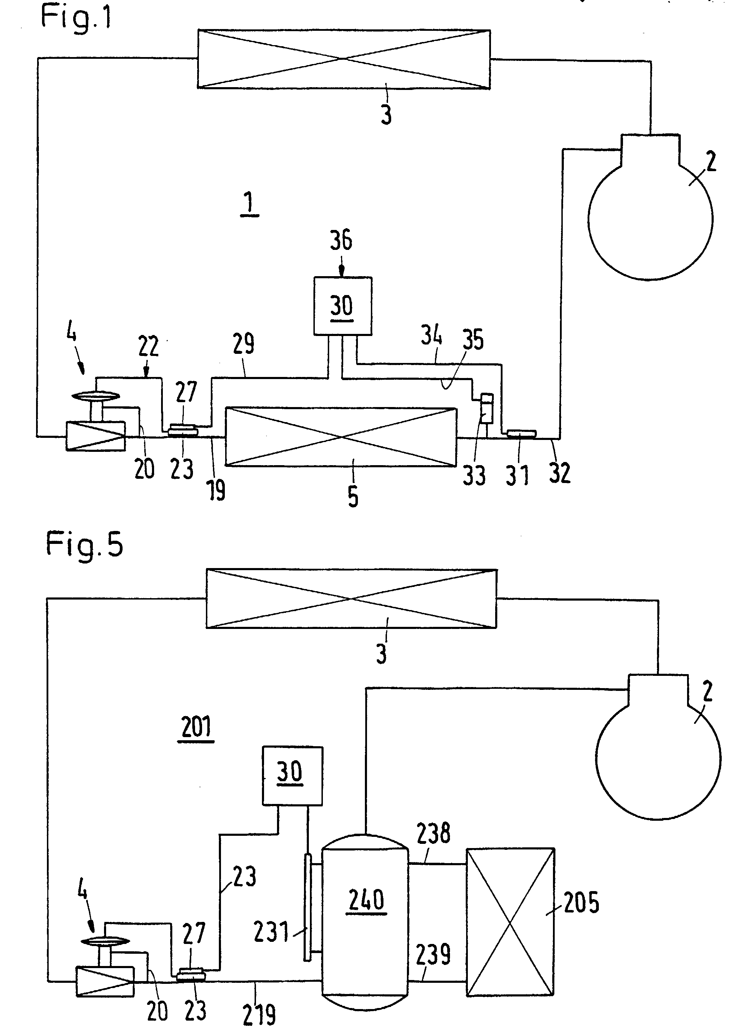

Fig. 1 zeigt eine Kälteanlage 1, bei der in Reihe hintereinander ein Verdichter 2 für das Kältemittel, ein Kondensator 3, ein Expansionsventil 4 und ein Trocken-Verdampfer 5 angeordnet sind. Unter einem Trocken-Verdampfer versteht man einen Verdampfer, bei dem das gesamte Kältemittel beim einmaligen Durchlauf durch den Verdampfer verdampft ist.

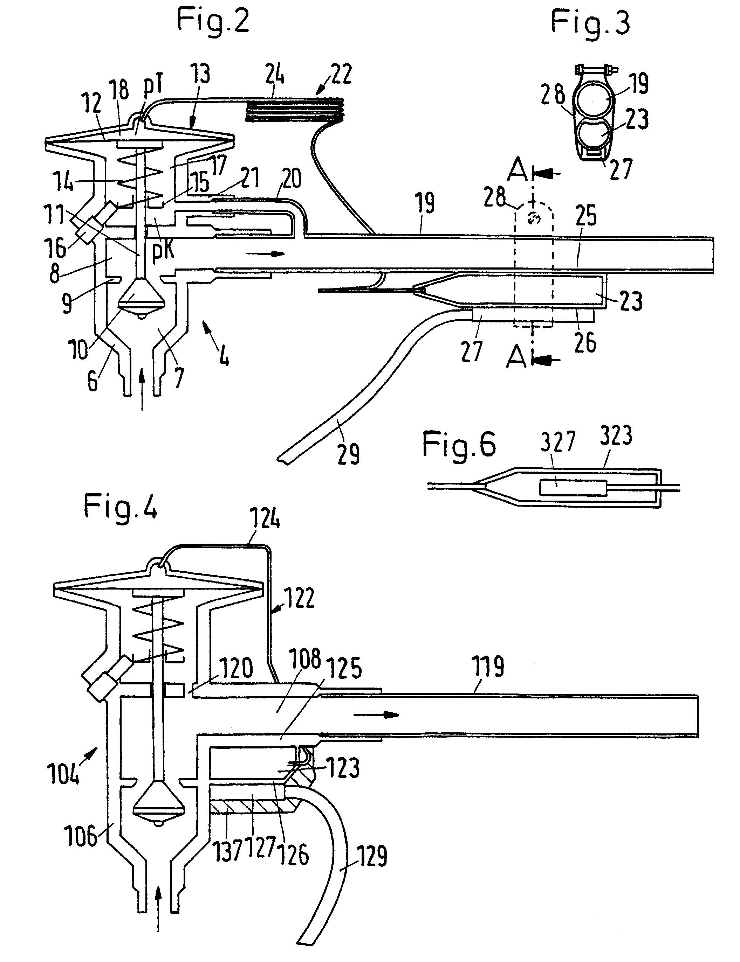

Das Expansionsventil 4 kann beispielsweise die in Fig. 2 veranschaulichte Form haben. Ein Ventilgehäuse 6 weist einen Eingangsraum 7 und einen Ausgangsraum 8 auf, zwischen denen sich ein Ventilsitz 9 befindet. Das zugehörige Verschlußstück 10 wird von einer Ventilstange 11 getragen, die mit einem Stellglied 12 in einer Membrandose 13 zusammenwirkt. Das Verschlußstück 10 steht unter dem Einfluß einer Feder 14, deren Federteller 15 mittels einer Stellvorrichtung 16 verstellbar ist, ferner unter dem Einfluß des Drucks pK in einem unteren Druckraum 17 und in entgegengesetzter Richtung unter dem Einfluß des Drucks pT in einem oberen Druckraum 18. Mit dem ausgangsseitigen Raum 8 ist eine Kältemittelleitung 19 in der Form eines Kupferrohres verbunden. Deren Innenraum ist über einen als Rohr ausgebildeten Ausgleichskanal 20 mit einem Stutzen 21 verbunden, der zum unteren Druckraum 17 führt. Der Druck pK entspricht daher dem Kältemitteldruck am Ausgang des Expansionsventils 4.

Der obere Druckraum 18 ist Teil eines Fühlersystems 22, dessen Fühler 23 über ein Kapillarrohr 24 mit dem oberen Druckraum 18 verbunden ist. Der Fühler 23 liegt mit einem ersten Wandabschnitt 25 an der Kältemittelleitung 19 an. Ein zweiter Wandabschnitt 26 auf der gegenüberliegenden Seite dient zur Anlage eines elektrisch beheizbaren Heizelements 27. Eine Spannvorrichtung 28, z.B. Band oder Bügel, dient dazu, den Fühler 23 und das Heizelement 27 an der Kältemittelleitung 19 zu befestigen. Die Stromzufuhr zum Heizelement 27 erfolgt über eine elektrische Leitung 29. Das Fühlersystem 22 enthält eine Flüssigkeits-Dampf-Füllung, was bedeutet, daß der Druck pT im Druckraum 18 gleich dem Sättigungsdruck des Füllmediums bei der jeweiligen Fühlertemperatur ist.

Wie Fig. 1 weiter zeigt, braucht für die Betätigung des Expansionsventils 4 lediglich ein einziges Verbindungselement, nämlich die elektrische Leitung 29, in den Bereich des Expansionsventils 4 geführt zu werden. Die vom Heizelement 27 abzugebende Wärmeleistung wird durch einen Regler 30 vorgegeben, dem als Istwert die augenblickliche Überhitzung, also die Differenz zwischen der tatsächlichen Kältemitteltemperatur und der Sättigungstemperatur, zugeführt wird. Zu diesem Zweck wird in bekannter Weise mit einem Temperaturfühler 31, die an der Ausgangsleitung 32 des Verdampfers anliegt, die Kältemitteltemperatur und mit einem Druckfühler 33, der mit dem Innenraum der Leitung 32 in Verbindung steht, der Kältemitteldruck, der mit der Sättigungstemperatur gleichwertig ist, gemessen. Die Meßwerte werden über Signalleitungen 34 und 35 zum Regler 30 geführt. Die Fühler 31 und 33 können elektronische Fühler sein, welche elektrische Signale über die Signalleitungen abgeben. Durch einen Eingang 36 ist angedeutet, daß auch noch weitere Einflüsse außer der Überhitzung geltend gemacht werden können.

Das Füllmedium im Fühlersystem ist mit Bezug auf das Kältemittel so gewählt, daß bei fehlender Beheizung der Fühlerdruck pT oberhalb des Stellgliedes etwas höher ist als der Kältemitteldruck pK unterhalb des Stellgliedes. Die Druckverhältnisse sind aber so abgestimmt, daß aufgrund der Feder 14 die von unten wirkende Kraft etwas größer ist als die von oben wirkende Kraft. Daher ist das Expansionsventil bei fehlender Beheizung geschlossen. Es genügt aber eine geringfügige Wärmezufuhr, um das Ventil zu öffnen. Außerdem ist dafür gesorgt, daß die Summenkurve von Federkraft und Kältemitteldruck pK im Regelbereich einen konstanten Abstand von der Kurve des Fühlerdrucks pT einen etwa konstanten Abstand hat. Mit Hilfe der Feder 14 wird eine Überhitzung, z.B. 4° C eingestellt. Sobald diese überschritten wird, öffnet das Expansionsventil.

Im Betrieb wird am Regler 30, vorzugsweise einem PI-Regler, ein Bezugswert eingestellt und dieser mit dem Meßwert der Überhitzung verglichen. In Abhängigkeit von der Abweichung der Meßwerte vom Bezugswert wird die Heizleistung geregelt, so daß sich ein kontinuierlicher Betrieb mit wenig Schwankungen ergibt. Hierbei ist der Öffnungsgrad des Ventils proportional zur zugeführten Heizleistung und zwar unabhängig von der Höhe des Verdampferdrucks in der Kältemittelleitung 19.

Aus Fig. 2 ist ferner ersichtlich, daß das Expansionsventil selbst ein Standardventil ist, bei dem jedoch die Anschlüsse der beiden Druckräume 17 und 18 in neuartiger Weise versorgt werden. Weil alle Anschlüsse kurz hinter dem Expansionsventil erfolgen können, kann man Ventilgehäuse 6, Ausgleichskanal 20, Fühlersystem 22 und Kältemittelleitung 19 auch als vorgefertigte Baueinheit liefern.

Die elektrische Leitung 29 und die Signalleitungen 34 und 35 lassen sich ohne Schwierigkeiten in dem die Kälteanlage aufnehmenden Gerät verlegen, was zu einer weiteren Verbilligung beiträgt.

In Fig. 4 werden für entsprechende Teile um 100 erhöhte Bezugszeichen verwendet. Unterschiedlich ist zum einen, daß der Ausgleichskanal 120 als Bohrung intern im Gehäuse 106 vorgesehen ist. Außerdem dient als Fühler 123 ein Hohlraum im Ventilgehäuse 106, der mit einem Wandabschnitt 125 an den ausgangsseitigen Raum 108 des Ventilgehäuses 106 anschließt und auf der anderen Seite einen Wandabschnitt 126 besitzt, der frei nach außen weist und zur Anlage des Heizelements 127 dient. Fühler 123 und Heizelement 127 sind von einer Wärmeisolation 137 überdeckt, um Abstrahlungsverluste nach außen zu verhindern.

Bei dieser Konstruktion ist ein neuartiges Ventil vorgesehen, das alle wesentlichen Eigenschaften in und an seinem Gehäuse aufweist und mit oder ohne die Kältemittelleitung 119 als Baueinheit vorgefertigt werden kann.

Bei der Kälteanlage 201 in Fig. 5 werden für identische Teile dieselben Bezugszeichen wie in Fig. 1 und für abgewandelte Teile um 200 erhöhte Bezugszeichen verwendet. Hier wird ein überfluteter Verdampfer 205 benutzt, der durch eine obere Leitung 238 und eine untere Leitung 239 mit einem Sammelbehälter 240 verbunden ist. Das Kältemittel strömt als Mischung von Flüssigkeit und Dampf über die obere Leitung 238 in den Sammelbehälter 240 zurück, während über die untere Leitung 239 flüssiges Kältemittel in den Verdampfer 205 nachströmt. Diese Zirkulation erfolgt selbständig, kann aber auch durch eine Pumpe unterstützt werden. Ein Füllstandsanzeiger 231 meldet das Flüssigkeitsniveau an den Regler 30, der den Öffnungsgrad des Expansionsventils 4 so einstellt, daß eine gewünschte Füllhöhe aufrechterhalten bleibt.

Bei dem in Fig. 6 dargestellten Fühler 323 ist das Heizelement 327 im Fühler-Innenraum angeordnet. Ein solcher Fühler kann mit einer Spannvorrichtung ähnlich der Spannvorrichtung 28, an der Kältemittelleitung 19 befestigt werden.

Selbstverständlich können auch Kälteanlagen mit mehreren parallel geschalteten Verdampfern auf die beschriebene Weise betrieben werden. In diesem Fall kann der Fühler wahlweise vor dem Verteiler oder in einer der Zweigleitungen nach dem Verteiler angeordnet sein. Die Überhitzung kann auch auf andere Weise als in Fig. 1 dargestellt gemessen werden, beispielsweise durch je einen Temperaturfühler vor und hinter dem Verdampfer. Man kann auch den rohrförmigen Ausgleichskanal der Fig. 1 mit dem dem Gehäuse zugeordneten Fühler gemäß Fig. 5 oder umgekehrt den internen Ausgleichskanal gemäß Fig. 5 mit dem an der Kältemittelleitung anliegenden Fühler gemäß Fig. 1 oder 6 kombinieren.

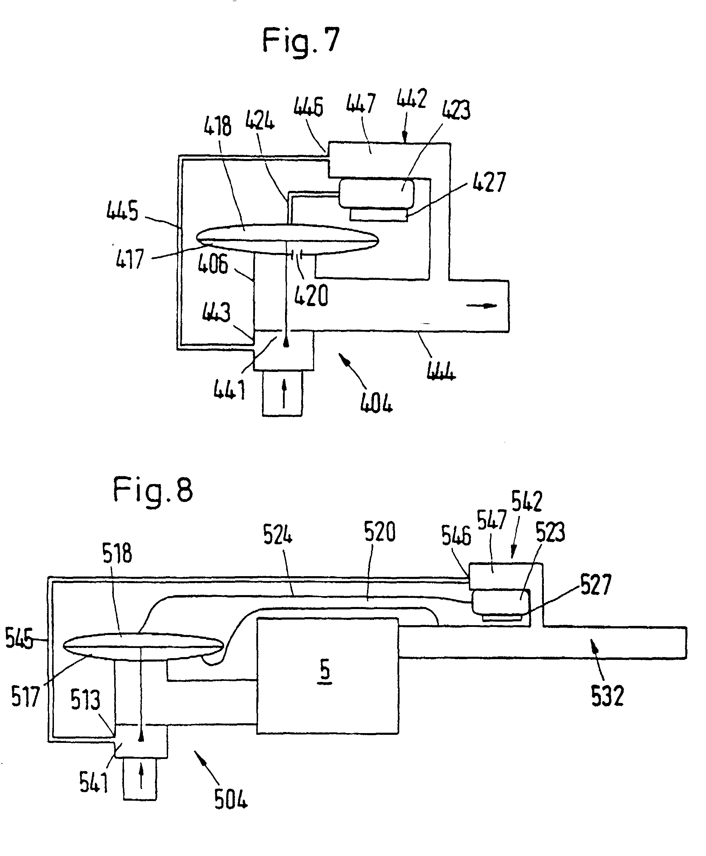

In Fig. 7 ist schematisch ein Expansionsventil 404 veranschaulicht, dessen Verschlußstück zusammen mit dem Ventilsitz eine erste Drosselstelle 441 bildet. Ein Bypass-Kanal 442 überbrückt diese Drosselstelle 441. Sie führt vom Eingangsstutzen 443 des Ventilgehäuses 406 zum Ausgangsstutzen 444 und weist hintereinander einen Leitungsabschnitt 445 kleinen Querschnitts, eine feste zweite Drosselstelle 446 in der Form einer kleinen Öffnung und eine Expansionskammer 447 auf. An der Wand der Expansionskammer 447 liegt ein Fühler 423 an, der auf der gegenüber liegenden Seite mit einem Heizelement 427 in Wärmekontakt steht, sowie über ein Kapillarrohr 424 mit dem oberen Druckraum 448 verbunden ist. Der Druckraum 417 ist durch den ausgangsseitigen Druck des Kältemittels belastet.

Bei dieser Konstruktion nimmt das Kältemittel in der Expansionskammer 447 die Sättigungstemperatur an, die auch das Kältemittel am Ausgang des Expansionsventils 404 besitzt.

Bei der Ausführungsform nach Fig. 8 werden für entsprechende Teile um 100 gegenüber Fig. 7 erhöhte Bezugszeichen verwendet. Im Unterschied zu Fig. 7 überbrückt der Bypass-Kanal 542 nicht nur die erste Drosselstelle 541 des Expansionsventils 504, sondern auch den gesamten Verdampfer 5, führt also vom Eingangsstutzen 543 des Expansionsventils 504 bis zur Ausgangsleitung 532 des Verdampfers 5. Wiederum liegt der Fühler 523 an der Wand der Expansionskammer 547 an und wird von einem Heizelement 527 beheizt. Um den Druckabfall im Verdampfer 5 zu berücksichtigen, ist der Druckraum 517 über einen Ausgleichskanal 520 in der Form eines Kapillarrohrs mit der Ausgangsleitung 532 verbunden.

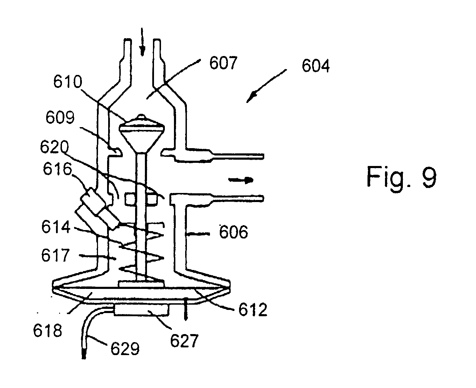

Fig. 9 zeigt eine weitere, abgewandelte Form eines Expansionsventils, bei der gleiche Teile mit um 600 erhöhten Bezugszeichen gegenüber der Darstellung der Fig. 1 bis 3 versehen sind.

Man kann zunächst erkennen, daß das Ventil 604 aus Fig. 9 relativ zu den zuvor dargestellten Ausführungsformen der Erfindung umgedreht ist. In dieser Form der Erfindung ist, ähnlich zu der Ausgestaltung nach Fig. 4, der Ausgleichskanal 620 innerhalb des Ventils 604. Im übrigen ist das Ventil 604 im wesentlichen identisch zu der Form, die in Fig. 2 dargestellt ist.

In der Ausgestaltung der Fig. 9 ist ein getrennter Fühler nicht vorgesehen. Stattdessen ist das Heizelement 627 direkt am Gehäuse 606 des Ventils 604 an der Fühlerkammer 618 angebracht. Eine elektrische Leitung 629 führt zu dem Regler 30, wie oben beschrieben.

In dieser Form der Erfindung wird die Wärme direkt der Sensorkammer 18 zugeführt durch das Heizelement 627 ohne die Notwendigkeit eines getrennten Sensors und eines Kapillarrohrs. Dies macht das Ventil 604 einfacher als die zuvor gezeigten Ausführungsformen der Erfindung. Um ein richtiges und wirksames Beheizen des Mediums in der Sensorkammer 418 zu bewirken, muß das Ventil 604 jedoch umgedreht werden.

Die erfindungsgemäße Betriebsweise wird nun genauer beschrieben. In jeder Form der Erfindung, sei es mit getrennten Sensoren 23, 123, 323, 423 oder 523, oder in der Ausgestaltung, bei der das Heizelement 627 die Wärme direkt an das Expansionsventil 604 abgibt, öffnet das Ventil, wenn der Druck in der Sensorkammer 18 die Summe des Drucks in der Druckkammer 17 und der Kraft der Feder 14. Bei der Ausgestaltung der Erfindung, die einen Sensor verwendet, wird die meiste Energie, die durch die Heizelemente 27, 127 oder 327 aufgebracht wird, in das Medium innerhalb des Sensors fließen, obwohl ein kleiner Teil durch die Wand des Sensors um das Medium herum fließen wird. Wärme von dem Heizelement bewirkt, daß das Fluidmedium kocht und verdampftes Kühlmittel wirft Blasen nach oben zu dem oberen Teil des Sensors, wo die Temperatur niedriger ist. Der Kältemitteldampf kondensiert unter Abgabe von Wärme an die obere Seite des Sensors, der am Ausgang des Expansionsventils anliegt. Zur gleichen Zeit wird der Druck innerhalb des Sensors erhöht, wobei der Druck an die Sensorkammer 18 angelegt wird und das Ventil öffnet.

In ähnlicher Weise wird bei der Ausgestaltung der Erfindung nach Fig. 7 Wärme, die durch das Heizelement 627 erzeugt wird, direkt in das Medium eingebracht, das innerhalb der Sensorkammer 618 angeordnet ist. Wärme von dem Heizelement bewirkt, daß das Fluidmedium in der Sensorkammer 618 kocht, was den Druck innerhalb der Sensorkammer 618 erhöht und somit das Ventil 404 öffnet. Zur gleichen Zeit steigen Kühlmittelblasen nach oben in der Sensorkammer 618 zu Bereichen, wo die Temperatur niedriger ist. Hier kondensiert der Dampf unter Abgabe von Wärme an die umgebende Flüssigkeit und die Wärme wird dann durch das Stellglied 612 in die Druckkammer 417 geleitet. Es gibt deswegen eine konstante Übertragung von Wärme auf das Kühlmittel, das durch das Ventil 604 fließt und zwar in der gleichen Art und Weise, wie bei den ersten Ausführungsformen der Erfindung, wo es eine konstante Übertragung von Wärme von dem Sensor 23, 123 oder 323 zum Auslaßrohr 19 gibt, das vom Verdampferventil kommt.

**Patentansprüche**

1. Verfahren zur Regelung einer Kälteanlage, die in Reihe einen Verdichter, einen Kondensator, ein Expansionsventil und einen Verdampfer aufweist, mittels des Expansionsventils, das als Stellglied eine Membran oder einen Balg aufweist und durch Wärmezufuhr mittels eines Heizelements beeinflußbar ist, wobei die eine Seite des Stellglieds vom verdampferseitigen Kältemitteldruck belastet wird, wobei die andere Seite des Stellglieds vom Dampfdruck eines mit einer Füllung, deren Druck temperaturabhängig ist, versehenen Fühlersystems belastet wird, dessen Fühlertemperatur durch die Sättigungstemperatur des Kältemittels und durch die Wärmezufuhr bestimmt ist, und wobei die Überhitzung an der Ausgangsseite eines Trocken-Verdampfers oder das Flüssigkeitsniveau eines überfluteten Verdampfers gemessen und die Wärmezufuhr in Abhängigkeit vom Meßwert geregelt wird.

2. Verfahren nach Anspruch 1, dadurch gekennzeichnet, daß die eine Seite des Stellglieds vom Kältemitteldruck an der Ausgangsseite des Expansionsventils belastet wird.

3. Verfahren nach Anspruch 1 oder 2, dadurch gekennzeichnet, daß die Fühlertemperatur an der Ausgangsseite des Expansionsventils von der Sättigungstemperatur des Kältemittels beeinflußt wird.

4. Verfahren nach Anspruch 1 oder 2, dadurch gekennzeichnet, daß ein Teil des Kältemittels an der Drosselstelle des Expansionsventils vorbei geleitet und an einer festen zweiten Drosselstelle entspannt wird und daß der Fühler hinter der zweiten Drosselstelle von der Sättigungstemperatur des Kältemittels beeinflußt wird.

5. Kälteanlage, die in Reihe einen Verdichter (2), einen Kondensator (3), ein Expansionsventil (4; 104) und einen Verdampfer (5) aufweist, wobei das Expansionsventil (4; 104) als zwei Druckräume (17, 18) trennendes Stellglied (12) eine Membran oder einen Balg aufweist und durch Wärmezufuhr mittels eines Heizelements (27; 127; 327) beeinflußbar ist, wobei der eine Druckraum (17) über einen Ausgleichskanal (20; 120) mit dem verdampferseitigen Kältemittelpfad verbunden ist, wobei der andere Druckraum (18) Teil eines mit einer Füllung, deren Druck temperaturabhängig ist, versehenen Fühlersystems (22; 122) ist, dessen Fühler (23; 123; 323) mit dem Kältemittel an der Ausgangsseite des Expansionsventils (4; 104) und mit dem Heizelement (27; 127; 327) in thermischer Verbindung steht und wobei ein Regler (30) vorgesehen ist, der das Heizelement (27; 127; 327) in Abhängigkeit von der Überhitzung am Ausgang eines Trocken-Verdampfers (5) oder von dem Flüssigkeitsniveau eines überfluteten Verdampfers (205) ansteuert.

6. Kälteanlage, die in Reihe einen Verdichter (2), einen Kondensator (3), ein Expansionsventil (404; 504), einen Verdampfer (5) und einen Bypasskanal (445; 545), der die Drosselstelle (441; 541) des Expansionsventils (404; 504) überbrückt und eine feste zweite Drosselstelle (446; 546) mit anschließender Expansionskammer (447; 547) enthält, aufweist, wobei das Expansionsventil (404; 504) als zwei Druckräume (417, 418; 517, 518) trennendes Stellglied eine Membran oder einen Balg aufweist und durch Wärmezufuhr mittels eines Heizelements (427; 527) beeinflußbar ist, wobei der eine Druckraum (417; 517) über einen Ausgleichskanal (420) mit dem verdampferseitigen Kältemittelpfad verbunden ist, wobei der andere Druckraum (418; 518) Teil eines mit einer Füllung, deren Druck temperaturabhängig ist, versehenen Fühlersystems ist, dessen Fühler (423; 523) mit dem Kältemittel in der Expansionskammer (447; 547) und mit dem Heizelement (427; 527) in Wärmeaustausch steht, und wobei ein Regler (30) vorgesehen ist, der das Heizelement (427; 527) in Abhängigkeit von der Überhitzung am Ausgang eines Trocken-Verdampfers (5) oder von dem Flüssigkeitsniveau eines überfluteten Verdampfers (205) ansteuert.

7. Kälteanlage nach Anspruch 5 oder 6, dadurch gekennzeichnet, daß das Rohr (445, 545) als Kapillarrohr ausgebildet ist.

8. Kälteanlage nach Anspruch 6 oder 7, dadurch gekennzeichnet, daß der Ausgleichskanal (20; 120) mit der Ausgangsseite des Expansionsventils (4; 104) verbunden ist.

9. Kälteanlage nach einem der Ansprüche 6 bis 8, dadurch gekennzeichnet, daß der Ausgleichskanal (20; 120) und/oder der Fühler (23; 123) dem Expansionsventil dicht benachbart sind.

10. Kälteanlage nach einem der Ansprüche 6 bis 9, dadurch gekennzeichnet, daß der Ausgleichskanal (20) durch ein Rohr gebildet wird, das den Innenraum der an den Ausgang des Expansionsventils (4) anschließenden Kältemittelleitung (19) mit einem zu dem einen Druckraum (17) führenden Stutzen (21) verbindet.

11. Kälteanlage nach einem der Ansprüche 6 bis 9, dadurch gekennzeichnet, daß der Ausgleichskanal (120) im Ventilinneren verläuft.

12. Kälteanlage nach einem der Ansprüche 6 bis 11, dadurch gekennzeichnet, daß der Fühler (23; 123; 323; 423; 523) über ein Kapillarrohr (24; 124; 424; 524)) mit dem anderen Druckraum (18; 418, 518)) verbunden ist.

13. Kälteanlage nach einem der Ansprüche 6 und 8 bis 12, dadurch gekennzeichnet, daß der Fühler (23) an der an den Ausgang des Expansionsventils (4) anschließenden Kältemittelleitung (19) anliegt und vom Heizelement (27) kontaktiert wird.

14. Kälteanlage nach Anspruch 13 dadurch gekennzeichnet, daß der Fühler (23) und das Heizelement (27) durch eine Spannvorrichtung (28) an der Kältemittelleitung (19) festgehalten sind.

15. Kälteanlage nach einem der Ansprüche 6 und 8 bis 12, dadurch gekennzeichnet, daß der Fühler (123) im oder am ausgangsseitigen Gehäuseteil des Expansionsventils (104) angeordnet und vom Heizelement (127) kontaktiert ist.

16. Kälteanlage nach Anspruch 15, dadurch gekennzeichnet, daß der Fühler (123) durch einen Hohlraum im ausgangsseitigen Gehäuseteil gebildet ist.

17. Kälteanlage nach einem der Ansprüche 7 bis 12, dadurch gekennzeichnet, daß der Fühler (423; 523) an der Wand der Expansionskammer (447; 547) anliegt.

18. Kälteanlage nach einem der Ansprüche 7, 12 und 17, dadurch gekennzeichnet, daß der Bypasskanal (542) auch den Verdampfer (5) überbrückt und der Ausgleichskanal (520) hinter dem Verdampfer (5) mit der Kältemittelleitung (532) verbunden ist.

19. Kälteanlage nach einem der Ansprüche 7 bis 12, 16 und 17, dadurch gekennzeichnet, daß der Bypasskanal (442) an der Ausgangsseite des Expansionsventils (404) in die Kühlmittelleitung mündet.

20. Kälteanlage nach einem der Ansprüche 6 bis 19, dadurch gekennzeichnet, daß das Heizelement (327) im Innern des Fühlers (323) angeordnet ist.

21. Kälteanlage nach einem der Ansprüche 6 bis 20, dadurch gekennzeichnet, daß der Fühler (123) und/oder das Heizelement (127) durch eine Wärmeisolation (137) gegenüber der Umgebung abgedeckt sind.

22. Expansionsventil für eine Kälteanlage mit einem Ventilgehäuse (6; 106), das zwischen einem eingangsseitigen Raum (7) und einem ausgangsseitigen Raum (8; 108) einen Ventilsitz (9) und zwischen zwei Druckräumen (17, 18; 417, 418; 517, 518)) ein als Membran oder Balg ausgebildetes Stellglied (12) zur Betätigung eines Verschlußstücks (10) aufweist, und mit einem Heizelement (27; 127; 327; 427; 527), wobei der ausgangsseitige Raum (8; 108) und der eine Druckraum (17; 417; 517) durch einen Ausgleichskanal (20; 120; 520) verbunden sind und wobei der andere Druckraum (18; 418; 518)) Teil eines mit einer Flüssigkeits-Dampf-Füllung versehenen fühlersystems (22; 122) ist, dessen Fühler (23; 123; 323; 423; 523) zum Wärmeaustausch mit dem ausgangsseitigen Kältemittel und zum Wärmeaustausch mit dem Heizelement (27; 127; 327; 427; 527) ausgebildet ist.

23. Expansionsventil nach Anspruch 22, dadurch gekennzeichnet, daß das Ventilgehäuse (6; 106), der Ausgleichskanal (20; 120) und das Fühlersystem (22; 122) eine vorgefertigte Baueinheit bilden.

24. Expansionsventil nach Anspruch 22 oder 23, dadurch gekennzeichnet, daß der Fühler (23; 123; 323; 423; 523) über ein Kapillarrohr (24; 124; 424; 524) mit dem anderen Druckraum (18; 418; 518) verbunden ist.

25. Expansionsventil nach einem der Ansprüche 22 bis 24, dadurch gekennzeichnet, daß der Fühler (123) im oder am Ventilgehäuse (106) angeordnet ist.

26. Expansionsventil nach einem der Ansprüche 22 bis 24, dadurch gekennzeichnet, daß die an dem Ventilausgang anschließende Kältemittelleitung (19) Teil der Baueinheit ist und als Träger für den Fühler (23) und das Heizelement (27) dient.

27. Expansionsventil nach einem der Ansprüche 22 bis 26, dadurch gekennzeichnet, daß das Heizelement (27; 127) außen am Fühler (23; 123) anliegt.

28. Expansionsventil nach einem der Ansprüche 22 bis 26, dadurch gekennzeichnet, daß das Heizelement (327) im Innern des Fühlers (323) angeordnet ist.

**29.** Expansionsventil nach einem der Ansprüche 26 bis 28, dadurch gekennzeichnet, daß der Ausgleichskanal (20) durch ein Rohr gebildet ist, das den Innenraum der Kältemittelleitung (19) mit einem zu dem einen Druckraum (17) führenden Stutzen (21) am Ventilgehäuse (6) verbindet.

**30.** Expansionsventil nach einem der Ansprüche 22 bis 29, dadurch gekennzeichnet, daß der Ausgleichskanal (120) im Innern des Ventilgehäuses (106) verläuft.

**31.** Expansionsventil nach einem der Ansprüche 22, 24 und 27 bis 30, dadurch gekennzeichnet, daß Eingang und Ausgang des Expansionsventils (404; 504) über einen Bypasskanal (442; 542), der eine feste Drosselstelle (446; 546) mit anschließender Expansionskammer (447; 547) aufweist, verbunden sind und daß der Fühler (423; 523) an der Wand der Expansionskammer (447; 547) anliegt.

**Claims**

**1.** Method for controlling a refrigeration system, which comprises in series a compressor, a condenser, an expansion valve and an evaporator, by means of the expansion valve, which as actuator has a diaphragm or a bellows and which is arranged to be acted upon by supply of heat by means of a heating element, characterised in that one side of the actuator is biased by the refrigerant pressure on the evaporator side, the other side of the actuator is biased by the vapour pressure of a sensor system provided with a filling, whose pressure is temperature dependent, the sensor temperature of which sensor system is determined by the saturation temperature of the refrigerant and by the heat supply, and that superheat on the outlet side of a dry evaporator or the liquid level of a flooded evaporator is measured and the supply of heat is regulated in dependence on the measured value.

**2.** Method according to claim 1, characterised in that one side of the actuator is acted upon by the refrigerant pressure on the outlet side of the expansion valve.

**3.** Method according to claim 1 or 2, characterised in that the sensor temperature at the outlet side of the expansion valve is influenced by the saturation temperature of the refrigerant.

**4.** Method according to claim 1 or 2, characterised in that part of the refrigerant is led past the throttling point of the expansion valve and is expanded at a fixed second throttling point, and that after the second throttling point the sensor is influenced by the saturation temperature of the refrigerant.

**5.** Refrigeration system, which comprises in series a compressor (2), a condenser (3), an expansion valve (4) and an evaporator (5), the expansion valve (4; 104) comprising, as actuator (12) dividing two pressure chambers (17, 18), a diaphragm or a bellows and being arranged to be acted upon by supply of heat by means of a heating element (27; 127; 327), characterised in that the one pressure chamber (17) is connected <u>via</u> a compensating channel (20; 120) with the refrigerant path of the evaporator side, the other pressure chamber (18) is part of a sensor system (22; 122) provided with a filling, whose pressure is temperature dependent, the sensor (23; 123; 223) of which is in thermal contact with the refrigerant on the outlet side of the expansion valve (4; 104) and with the heating element (27; 127; 327), and that a controller (30) is provided, which controls the heating element (27; 127; 327) in dependence on superheat at the outlet of a dry evaporator (5) or on the liquid level of a flooded evaporator (205).

**6.** Refrigeration system, which comprises in series a compressor (2), a condenser (3), an expansion valve (404; 504), an evaporator (5) and a bypass channel (445; 545) bridging the throttling point (441; 541) of the expansion valve (404; 504) and a fixed second throttling point (446; 546) with subsequent expansion chamber (447; 547), characterised in that the expansion valve (404; 504) as actuator dividing two pressure chambers (417, 418; 517, 518) comprises a diaphragm or a bellows and is acted upon by heat supply from a heating element (427; 527), one pressure chamber (417; 517) being connected with the evaporator side refrigerant path via a compensating channel (420), the other pressure chamber (418; 518) being part of a sensor system with a filling, whose pressure is temperature dependent, the sensor (423; 523) of which is in heat-exchange with the refrigerant in the expansion chamber (447; 547) and with the heating element (427; 527), a controller (30) being provided, which controls the heating element (427; 527) in dependence on superheat at the outlet of a dry evaporator (5) or on the liquid level of a flooded evaporator (205).

**7.** Refrigeration system according to claim 5 or 6, characterised in that the pipe (445, 545) is a capillary tube.

**8.** Refrigeration system according to claim 6 or 7, characterised in that the compensating channel (20; 120) is connected with the outlet side of the expansion valve (4; 104).

9. Refrigeration system according to one of the claims 6 to 8, characterised in that the compensating channel (20; 120) and/or the sensor (23; 123) are closely adjacent to the expansion valve.

10. Refrigeration system according to one of the claims 6 to 9, characterised in that the compensating channel (20) is formed by a pipe that connects the refrigerant line's interior (19) adjoining the outlet of the expansion valve (4) to a connector (21) leading to the one pressure chamber (17).

11. Refrigeration system according to one of the claims 6 to 9, characterised in that the compensating channel (120) runs inside the valve.

12. Refrigeration system according to one of the claims 6 to 11, characterised in that the sensor (23; 123; 323; 423; 523) is connected <u>via</u> a capillary tube to (24; 124; 424; 524) to the other pressure chamber (18; 418; 518).

13. Refrigeration system according to one of the claims 6, and 8 to 12, characterised in that the sensor (23) is situated on the refrigerant line (19) adjoining the outlet of the expansion valve (4) and is contacted by the heating element (27).

14. Refrigeration system according to claim 13, characterised in that the sensor (23) and the heating element (27) are secured to the refrigerant line (19) by a retaining device (28).

15. Refrigeration system according to one of the claims 6, and 8 to 12, characterised in that the sensor (123) is arranged in or on the housing part of the expansion valve (104) located on the outlet side and is contacted by the heating element (127).

16. Refrigeration system according to claim 15, characterised in that the sensor (123) is formed by a chamber in the housing part located on the outlet side.

17. Refrigeration system according to one of the claims 7 to 12, characterised in that the sensor (423; 523) is mounted on the wall of the expansion chamber (447; 547) .

18. Refrigeration system according to one of the claims 7, 12 and 17, characterised in that the bypass channel (542) also bridges the evaporator (5) and that the compensating channel (520) behind the evaporator (5) is connected with the refrigerant line (532).

19. Refrigeration system according to one of the claims 7 to 12, 16 and 17, characterised in that on the outlet side of the expansion valve (404) the bypass channel (442) flows into the refrigerant line.

20. Refrigeration system according to one of the claims 6 to 19, characterised in that the heating element (327) is arranged inside the sensor (323).

21. Refrigeration system according to one of the claims 6 to 20, characterised in that the sensor (123) and/ or the heating element (127) are covered by a heat insulation (137) with respect to the environment.

22. Expansion valve for a refrigeration system, having a valve housing (6; 106), which has a valve seat (9) between a chamber (7) located on the inlet side and a chamber (; 108) located on the outlet side and between two pressure chambers (17, 18; 417, 418; 517, 518) has an actuator (12) in the form of a diaphragm or bellows for the operation of a locking piece (10), and having a heating element (27;127; 327; 427; 527), characterised in that the chamber (8; 108) located on the outlet side and the one pressure chamber (17; 417; 517) are connected by a compensating channel (20; 120; 520) and the other pressure chamber (18; 418; 518) is part of a sensor system (22; 122) filled with a liquid-vapour filling, the sensor (23; 123; 323; 423; 523) of which is arranged for heat-exchange with the outlet side refrigerant and for heat-exchange with the heating element (27; 127; 327; 427; 527).

23. Expansion valve according to claim 22, characterised in that the valve housing (6; 106), the compensating channel (20; 120) and the sensor system (22; 122) form a pre-assembled module.

24. Expansion valve according to claim 22 or 23, characterised in that the sensor (23; 123; 323; 423; 523) is connected by way of a capillary tube (24; 124; 424; 524)) to the other pressure chamber (18; 418; 518).

25. Expansion valve according to one of the claims 22 to 24, characterised in that the sensor (123) is arranged in or on the valve housing (106).

26. Expansion valve according to one of the claims 22 to 24, characterised in that the refrigerant line (19) adjoining the valve outlet is part of the module and serves as carrier for the sensor (23) and the heating element (27).

27. Expansion valve according to one of the claims 22 to 26, characterised in that the heating element (27; 127) is mounted on the outside of the sensor (23; 123).

28. Expansion valve according to one of the claims 22 to 26, characterised in that the heating element (327) is arranged inside the sensor (323).

29. Expansion valve according to one of the claims 26 to 28, characterised in that the compensating channel (20) is formed by a pipe which connects the interior of the refrigerant line (19) with a connector (21) on the valve housing (6), which connector leads to the one pressure chamber (17).

30. Expansion valve according to one of the claims 22 to 29, characterised in that the compensating channel (120) runs inside the valve housing (106).

31. Expansion valve according to one of the claims 22, 24 and 27 to 30, characterised in that the inlet and the outlet of the expansion valve (404; 504) are connected via a bypass channel (442; 542) having a fixed throttling point (446; 546) with adjacent expansion chamber (447; 547), and that the sensor (423; 523) is mounted on the wall of the expansion chamber (447; 547).

**Revendications**

1. Procédé de réglage ou de régulation d'une installation frigorifique comprenant, en série, un compresseur, un condenseur, une soupape de détente et un évaporateur, au moyen de la soupape de détente qui présente une membrane ou un soufflet en tant qu'organe de réglage, et peut être influencée par apport de chaleur au moyen d'un élément chauffant, l'un des côtés de l'organe de réglage étant sollicité par la pression de l'agent frigorigène côté évaporateur, l'autre côté de l'organe de réglage étant sollicité par la pression de vapeur d'un système détecteur doté d'un garnissage dont la pression dépend de la température, système dont la température de détection est déterminée par la température de saturation de l'agent frigorigène et par l'apport de chaleur, et sachant qu'on mesure l'échauffement excessif du côté sortie d'un évaporateur à sec ou le niveau de liquide d'un évaporateur inondé, et qu'on régule l'apport de chaleur en fonction de la valeur mesurée.

2. Procédé selon la revendication 1, caractérisé par le fait que l'un des côtés de l'organe de réglage est sollicité par la pression de l'agent frigorigène régnant du côté sortie de la soupape de détente.

3. Procédé selon la revendication 1 ou 2, caractérisé par le fait que la température de détection est influencée, du côté sortie de la soupape de détente, par la température de saturation de l'agent frigorigène.

4. Procédé selon la revendication 1 ou 2, caractérisé par le fait qu'une part de l'agent frigorigène est dirigée en regard de la zone d'étranglement de la soupape de détente, puis est détendue dans une seconde zone fixe d'étranglement ; et par le fait que le détecteur est influencé, derrière la seconde zone d'étranglement, par la température de saturation de l'agent frigorigène.

5. Installation frigorifique comprenant, en série, un compresseur (2), un condenseur (3), une soupape de détente (4 ; 104) et un évaporateur (5), la soupape de détente (4 ; 104) présentant une membrane ou un soufflet en tant qu'organe de réglage (12) séparant deux chambres de pression (17, 18), et pouvant être influencée par apport de chaleur au moyen d'un élément chauffant (27 ; 127 ; 327), l'une (17) des chambres de pression étant reliée, par l'intermédiaire d'un canal de compensation (20 ; 120), au trajet parcouru par l'agent frigorigène du côté de l'évaporateur, l'autre chambre de pression (18) faisant partie d'un système détecteur (22 ; 122) doté d'un garnissage dont la pression dépend de la température, système dont le détecteur (23 ; 123 ; 323) est en liaison thermique avec l'agent frigorigène du côté sortie de la soupape de détente (4 ; 104), et avec l'élément chauffant (27 ; 127 ; 327), et sachant qu'il est prévu un régulateur (30) qui active l'élément chauffant (27 ; 127 ; 327) en fonction de l'échauffement excessif à la sortie d'un évaporateur à sec (5), ou du niveau de liquide d'un évaporateur inondé (205).

6. Installation frigorifique comprenant, en série, un compresseur (2), un condenseur (3), une soupape de détente (404 ; 504), un évaporateur (5) et un canal de dérivation (445 ; 545) qui court-circuite la zone d'étranglement (441 ; 541) de la soupape de détente (404 ; 504), et qui renferme une seconde zone fixe d'étranglement (446 ; 546) à chambre d'expansion (447 ; 547) attenante, la soupape de détente (404 ; 504) présentant une membrane ou un soufflet en tant qu'organe de réglage séparant deux chambres de pression (417, 418 ; 517, 518), et pouvant être influencée par apport de chaleur au moyen d'un élément chauffant (427 ; 527), l'une (417 ; 517) des chambres de pression étant reliée, par l'intermédiaire d'un canal de compensation (420), au trajet parcouru par l'agent frigorigène du côté de l'évaporateur, l'autre chambre de pression (418 ; 518) faisant partie d'un système détecteur doté d'un garnissage dont la pression dépend de la température, système dont le détecteur (423 ; 523) est en échange thermique avec l'agent frigorigène dans la chambre d'expansion (447 ; 547), et avec l'élément chauffant (427 ; 527), et sachant qu'il est prévu un régulateur (30) qui active l'élément chauffant (427 ; 527) en fonction de l'échauffement excessif à la sortie d'un évaporateur à sec (5), ou du niveau de liquide d'un évaporateur inondé (205).

**7.** Installation frigorifique selon la revendication 5 ou 6, caractérisée par le fait que le tube (445, 545) est réalisé sous la forme d'un tube capillaire.

**8.** Installation frigorifique selon la revendication 6 ou 7, caractérisée par le fait que le canal de compensation (20 ; 120) est relié au côté sortie de la soupape de détente (4 ; 104).

**9.** Installation frigorifique selon l'une des revendications 6 à 8, caractérisée par le fait que le canal de compensation (20 ; 120) et/ou le détecteur (23 ; 123) sont intimement voisins de la soupape de détente.

**10.** Installation frigorifique selon l'une des revendications 6 à 9, caractérisée par le fait que le canal de compensation (20) est formé par un tube qui raccorde l'espace interne du conduit (19) à agent frigorigène, attenant à la sortie de la soupape de détente (4), à un manchon (21) menant à l'une (17) des chambres de pression.

**11.** Installation frigorifique selon l'une des revendications 6 à 9, caractérisée par le fait que le canal de compensation (120) s'étend à l'intérieur de la soupape.

**12.** Installation frigorifique selon l'une des revendications 6 à 11, caractérisée par le fait que le détecteur (23 ; 123 ; 323 ; 423 ; 523) est relié à l'autre chambre de pression (18 ; 418, 518) par l'intermédiaire d'un tube capillaire (24 ; 124 ; 424 ; 524).

**13.** Installation frigorifique selon l'une des revendications 6 et 8 à 12, caractérisée par le fait que le détecteur (23) est appliqué contre le conduit (19) à agent frigorigène qui est attenant à la sortie de la soupape de détente (4), et est en contact avec l'élément chauffant (27).

**14.** Installation frigorifique selon la revendication 13, caractérisée par le fait que le détecteur (23) et l'élément chauffant (27) sont consignés à demeure, par l'intermédiaire d'un dispositif de serrage (28), sur le conduit (19) à agent frigorigène.

**15.** Installation frigorifique selon l'une des revendications 6 et 8 à 12, caractérisée par le fait que le détecteur (123) est disposé dans ou sur la partie du carter de la soupape de détente (104) qui est située côté sortie, et est en contact avec l'élément chauffant (127).

**16.** Installation frigorifique selon la revendication 15, caractérisée par le fait que le détecteur (123) est formé par une cavité ménagée dans la partie du carter qui est située côté sortie.

**17.** Installation frigorifique selon l'une des revendications 7 à 12, caractérisée par le fait que le détecteur (423 ; 523) est appliqué contre la paroi de la chambre d'expansion (447 ; 547).

**18.** Installation frigorifique selon l'une des revendications 7, 12 et 17, caractérisée par le fait que le canal de dérivation (542) court-circuite également l'évaporateur (5), et le canal de compensation (520) est relié au conduit (532) à agent frigorigène derrière ledit évaporateur (5).

**19.** Installation frigorifique selon l'une des revendications 7 à 12, 16 et 17, caractérisée par le fait que le canal de dérivation (442) débouche, du côté sortie de la soupape de détente (404), dans le conduit à agent de refroidissement.

**20.** Installation frigorifique selon l'une des revendications 6 à 19, caractérisée par le fait que l'élément chauffant (327) est logé à l'intérieur du détecteur (323).

**21.** Installation frigorifique selon l'une des revendications 6 à 20, caractérisée par le fait que le détecteur (123) et/ou l'élément chauffant (127) sont recouverts par une isolation thermique (137) vis-à-vis de l'espace environnant.

**22.** Soupape de détente pour une installation frigorifique, comprenant un carter (6 ; 106) qui présente un siège d'obturation (9) entre une chambre (7) située côté entrée et une chambre (8 ; 108) située côté sortie et, entre deux chambres de pression (17, 18 ; 417, 418 ; 517, 518), un organe de réglage (12) réalisé sous la forme d'une membrane ou d'un soufflet en vue d'actionner une pièce obturatrice (10), et comprenant un élément chauffant (27 ; 127 ; 327 ; 427 ; 527), la chambre (8 ; 108) située côté sortie, et l'une (17 ; 417 ; 517) des chambres de pression, étant reliées par l'intermédiaire d'un canal de compensation (20 ; 120 ; 520), et l'autre chambre de pression (18 ; 418 ; 518) faisant partie d'un système détecteur (22 ; 122) qui est doté d'un garnissage liquide-vapeur et dont le détecteur (23 ; 123 ; 323 ; 423 ; 523) est réalisé en vue de l'échange thermique avec l'agent frigorigène situé côté sortie, et en vue de l'échange thermique avec l'élément chauffant (27 ; 127 ; 327 ; 427 ; 527).

**23.** Soupape de détente selon la revendication 22, caractérisée par le fait que le carter (6 ; 106) de ladite soupape, le canal de compensation (20 ; 120) et le système détecteur (22 ; 122) forment un ensemble structurel unitaire préfabriqué.

**24.** Soupape de détente selon la revendication 22 ou 23, caractérisée par le fait que le détecteur (23 ; 123 ; 323 ; 423 ; 523) est relié à l'autre chambre de pression (18 ; 418 ; 518) par l'intermédiaire d'un tube capillaire (24 ; 124 ; 424 ; 524).

**25.** Soupape de détente selon l'une des revendications 22 à 24, caractérisée par le fait que le détecteur (123) est disposé dans ou sur le carter (106) de ladite soupape.

**26.** Soupape de détente selon l'une des revendications 22 à 24, caractérisée par le fait que le conduit (19) à agent frigorigène, attenant à la sortie de ladite soupape, fait partie de l'ensemble structurel unitaire et sert de support pour le détecteur (23) et l'élément chauffant (27).

**27.** Soupape de détente selon l'une des revendications 22 à 26, caractérisée par le fait que l'élément chauffant (27 ; 127) est appliqué extérieurement sur le détecteur (23 ; 123).

**28.** Soupape de détente selon l'une des revendications 22 à 26, caractérisée par le fait que l'élément chauffant (327) est logé à l'intérieur du détecteur (323).

**29.** Soupape de détente selon l'une des revendications 26 à 28, caractérisée par le fait que le canal de compensation (20) est formé par un tube qui assure le raccordement, sur le carter (6) de ladite soupape, entre l'espace interne du conduit (19) à agent frigorigène et un manchon (21) menant à l'une (17) des chambres de pression.

**30.** Soupape de détente selon l'une des revendications 22 à 29, caractérisée par le fait que le canal de compensation (120) s'étend à l'intérieur du carter (106) de ladite soupape.

**31.** Soupape de détente selon l'une des revendications 22, 24 et 27 à 30, caractérisée par le fait que l'entrée et la sortie de ladite soupape de détente (404 ; 504) sont raccordées par l'intermédiaire d'un canal de dérivation (442 ; 542) qui présente une zone fixe d'étranglement (446 ; 546) à chambre d'expansion (447 ; 547) attenante ; et par le fait que le détecteur (423 ; 523) est appliqué contre la paroi de ladite chambre d'expansion (447 ; 547).

**Fig.1**

**Fig.5**

Fig.2

Fig.3

Fig.6

Fig.4

# Fig.7

# Fig.8

Fig. 9